(19) Europäisches Patentamt
European Patent Office
Office européen des brevets

(11) **EP 2 317 473 A1**

(12) **EUROPEAN PATENT APPLICATION**

(43) Date of publication:
**04.05.2011 Bulletin 2011/18**

(51) Int Cl.:
***G06T 7/00*** (2006.01)

(21) Application number: **10173317.8**

(22) Date of filing: **18.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **25.09.2009 US 567454**

(71) Applicants:
• **Sony Corporation**
  **Tokyo 108-0075 (JP)**
• **Sony Electronics Inc.**
  **Park Ridge, NJ 07656 (US)**

(72) Inventors:
• **Baqai, Farhan A.**
  **Fremont, CA 94555 (US)**

• **Dong, Xiaogang**
  **Mountain View, CA 94041 (US)**
• **Matsushita, Nobuyuki**
  **San Diego, CA 92127-1898 (US)**
• **Nishio, Kenichi**
  **Yokohama 2410826 (JP)**
• **Matsui, Akira**
  **Kanagawa 2160007 (JP)**
• **Takatori, Jiro**
  **Tokyo 1080075 (JP)**

(74) Representative: **McGowan, Cathrine**
  **D Young & Co LLP**
  **120 Holborn**
  **London EC1N 2DY (GB)**

(54) **A method to measure local image similarity based on the L1 distance measure**

(57) A method of adaptive local image similarity measurement based on the $L_1$ distance measure is described. A relationship between distance measures is used to estimate appropriate thresholds for various patch sizes. The choice of patch size depends on the degradations contained in the image and the application. The relation between the similarity measures is established using the distribution of $L_1$ distances for various patch sizes. For larger degradations, similarity measure with a bigger patch size is employed. For lesser imperfections, a smaller patch size produces acceptable results. To keep the computational overhead manageable, the smallest patch size that gives the desired image quality is employed.

**Fig. 6**

EP 2 317 473 A1

**Description**

Field of the Invention

The present invention relates to the field of image processing. More specifically, the present invention relates to local image similarity measurement.

Background of the Invention

Estimation of local image similarity is an important problem in image processing. Conceptually, image similarity can be categorized into 3 classes as described by Greg Shakhnarovich in "Learning Task-Specific Similarity, PhD Thesis," Department of Electrical Engineering and Computer Science, Massachusetts Institute of Technology, 2005, which include: 1),Low level similarity. Patches are considered to be similar if some distance measure (e.g. p-norm, EarthMovcrs, Mahalanobis) is within some threshold; 2) Mid-level similarity. Here patches share some simple semantic property; and 3) High-level similarity. In this case, similarity is primarily defined by semantics. Properties that make two patches similar are not visual but they can be inferred from visual information such as a gesture.

In most single sensor color imaging systems, only one color per pixel is measured. The remaining components have to be estimated to complete the color information at each location. This process is known as demosaicking. Several configurations of the color filter array (CFA) can be used. The most popular CFA is the Bayer pattern as described by B.E. Bayer in "Color Imaging Array", US Patent 3,971,065, July 20, 1976, which consists of three colors (25% red, 50% green, and 25% blue pixels). Recently, to obtain better color accuracy and/or higher image fidelity other CFA's have been proposed. For instance, a four-color CFA improves color reproduction accuracy as described by T. Mizukura et al. in "Image pick-up device and image pick-up method adapted with image pick-up sensitivity", US Patent 7,489,346, February 10, 2009, arranging the Bayer colors in a zigzag arrangement instead of a rectangular array improves fill factor and pixel sensitivity as described in Yoshihara et al. in "A 1/1.8-inch 6.4 MPixel 60 frames/s CMOS Image Sensor With Seamless Mode Change", IEEE J. Solid-State Circuits, Vol. 41, No. 12, Dec. 2006, pp. 2998-3006, and a machine learning approach as described by F. Baqai in "Identifying optimal colors for calibration and color filter array design", US Patent Application 20070230774, October 4,2007, estimates statistically optimal CFA colors. Demosaicking algorithms are predicated on the observation that the high-frequency information in the color channels is highly correlated. Since green pixels in the CFA are typically much more in number than other colors, demosaicking algorithms copy high frequency information from the green channel to other color channels that are unknown at a given pixel location. To do this effectively, demosaicking algorithms need to infer local image structure by identifying a set of pixels or regions that share similar local geometry.

Similar to demosaicking, denoising is also an estimation problem. The objective is to estimate a noise-free pixel value from degraded observations. To get a good estimate, a set of pixels that share similar local structure need to be found within the degraded image. The denoised value is typically a weighted average of the pixels in the similar pixel set. The weights are able to be determined in many ways such as proximity, similarity, noise level or a combination thereof. For example, see F. Baqai, "System and method for denoising using signal dependent adaptive weights", U.S. Patent Application Serial No. 12/284,055, filed on September 18, 2008.

It is interesting to note that for both demosaicking and denoising, the estimated pixel value is a weighted combination of the similar pixel set. The weights serve a different purpose. In denoising, weights are chosen to smooth out unwanted oscillations; while in demosaicking the weights are chosen such that high-frequency information, in the unknown pixel estimate, is preserved. Some methods aim to do joint demosaicking and denoising by first estimating the basic structure and then iteratively fine tuning the result as described by A. Buades et al. in "Self-similarity driven color demosaicking", IEEE TIP, Vol. 18, No. 6, June 2009, pp. 1192-1202 and K. Hirakawa and T. Parks in "Joint demosaicing and denoising,", IEEE TIP, Vol. 15, No. 8, Aug. 2006, pp. 2146-2157. For all these situations, a common problem is to find similar image structures in the presence of degradations such as blur, distortions, and noise.

In the literature, low-level image similarity has many manifestations. For instance, similarity based on Euclidean distance ($L_2$ norm) between pixels is quite popular as described by C. Tomasi and R. Manduchi in "Bilateral Filtering for Gray and Color Images," Proc. of IEEE International Conference on Computer Vision, pp. 841-846, 1998. This measure is very sensitive to lighting conditions and noise. It does not compare local image structure. To make this measure more robust and amenable to estimating local geometry, patch-based Euclidean distances have been proposed in "Self similarity driven color demosaicking," cited above.

A critical part of the similarity measure is the threshold at which a pixel or an image patch is considered to be similar. The threshold is application dependent. It needs to be adjusted based on an estimate of the degree of degradation in the image, similarity criterion, and distance measure ($L_1$, $L_2$, and others). If the threshold is incorrectly chosen, the similarity measure will either include pixels that are not similar or will not yield a statistically significant number of similar pixels. This poses several challenges. For instance if the estimate of the local geometry is incorrect, several artifacts such as zipper effect, blur, and false colors may appear in the demosaicked image. Similarly, denoising may not adequately remove noise (under smooth), or it may blur edges and texture (over smooth).

Another important point to note is that the computational complexity is directly proportional to the number of pixels in the patch. For instance, the computational overhead of computing similar pixels for a $3\times3$ patch is 9 times and for a $5\times5$ patch is 25 times the computational complexity of a $1\times1$ patch. Clearly, as patch size increases, the computational overhead rapidly goes up. So it is desirable to employ a smallest patch size that achieves the desired structural similarity.

**Summary of the Invention**

Aspects and embodiments of the invention are set out in the appended claims.

A method of measuring low-level local image similarity using a relation between patch-based similarity measures of various patch sizes is described. The relation between similarity measures of various patch sizes is established using the probability distribution of $L_1$ distances for arbitrary patch sizes. Patch size depends on application and/or image conditions such as lighting, illuminant, aperture, focus, exposure, and camera gain. For instance, if an image is highly degraded, bigger patch size may be needed to effectively measure local image similarity. In some situations where there is very little degradation, a patch size of $1\times1$ (just one pixel) may be sufficient. Similarly, for segmentation and object detection, a bigger patch may be warranted.

In one embodiment, a method implemented on a device measuring local similarity in an image comprises obtaining imaging conditions, determining an appropriate patch size, choosing a threshold and measuring local image similarity. The imaging conditions are selected from the group consisting of lighting, illumination, exposure time, aperture, scene category and camera gain. The appropriate patch size is determined based on the imaging conditions. The threshold is from a set of thresholds stored in a lookup table. Choosing the threshold is based on a least one of desired similarity rate, imaging conditions, seamlessness of transition between patch size implementations. The method further comprises adaptively switching between patch sizes. The switching is automatic. The patch size is selected from the group consisting of a $1\times1$, $3\times3$, $5\times5$, $7\times7$, $9\times9$, $11\times11$, $13\times13$, $15\times15$ and $17\times17$ patch size. The device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®, a video player, a DVD writer/player, a television and a home entertainment system.

In another embodiment, a system implemented on a device for measuring local similarity in an image comprises a first module configured for utilizing a $1\times1$ patch size, a second module operatively coupled to this module configured for utilizing larger patch sizes and a switching module operatively coupled to the first module and the second module, the switching module configured for switching between the first module and the second module to measure local similarity of various patch sizes. The switching includes maintaining a same similarity rate irrespective of patch size. The switching is automatic. The larger patch sizes are selected from the group consisting of a $3\times3$, $5\times5$, $7\times7$, $9\times9$, $11\times11$, $13\times13$, $15\times15$ and $17\times17$ patch. The device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®, a video player, a DVD writer/player, a television and a home entertainment system.

In another embodiment, a device comprises a memory for storing an application, the application configured for determining an appropriate patch size for the application and/or imaging conditions, utilizing smaller patch sizes if image degradation is below a threshold and progressively increasing the patch size as degradation level increases and a processing component coupled to the memory, the processing component configured for processing the application. The device further comprises adaptively switching the patch size. Switching the patch size includes maintaining a same similarity rate irrespective of the patch size. The switching is automatic. The patch is selected from the group consisting of a $1\times1$, $3\times3$, $5\times5$, $7\times7$, $9\times9$, $11\times11$, $13\times13$, $15\times15$ and $17\times17$ patch. The device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®, a video player, a DVD writer/player, a television and a home entertainment system.

**Brief Description of the Drawings**

Embodiments of the invention will now be described with reference to the accompanying drawings, throughout which like parts are referred to by like references, and in which:

Figure 1 illustrates probability density for a $1\times1$ patch.

Figure 2 illustrates probability density for a 3×3 patch.
Figure 3 illustrates probability density for a 5×5 patch.
Figure 4 illustrates the threshold for a similarity rate of 0.5 for 1×1 patch.
Figure 5 illustrates the threshold for a similarity rate of 0.5 for 3×3 patch.
Figure 6 illustrates a flowchart of a method for measuring local image similarity.
Figure 7 illustrates similarity measure for 1×1 and 3×3 patches.
Figure 8 illustrates a block diagram of an exemplary computing device configured to implement the local image similarity measurement method.

Detailed Description

The similarity measure used herein is based on the $L_1$ distance as opposed to the popular $L_2$ distance. There are several reasons for this choice. Natural images have heavy tailed distributions, and noise characteristics corrupting the image can be non-Gaussian. The $L_1$ distance is more appropriate for such data since it is not as affected by outliers as $L_2$ distance or other fractional distances as described by P. Howarth and S. Ruger in "Fractional distance measures for content-based image retrieval," Lecture notes in computer science ISSN 0302-9743, Volume 3408, 2005, pp. 447-456. $L_1$ distance gives all components the same weighting. Secondly, it is computationally much simpler to compute the absolute difference ($L_1$ distance) as compared to the $L_2$ distance (which even if the square root is discounted is still the sum of the squared difference).

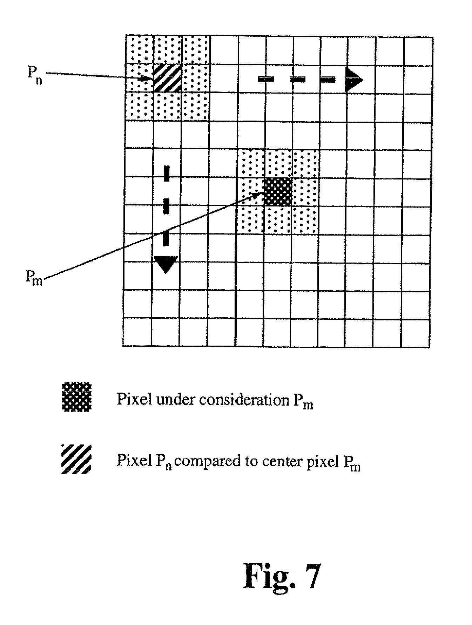

Figure 7 illustrates similarity measures for patch sizes 1×1 and 3×3. When patch size is 1×1, pixel under consideration $P_m$ is compared to other pixels. For instance, $P_n$ is similar to $P_m$ if the absolute difference is less than threshold $\tau_1$, which is able to be written as $|Pn-Pml < \tau_1$. For 3×3 patch, $P_n$ is similar to $P_m$ if the SAD of the 9 pixels in the 3×3 region around $P_n$ and $P_m$ is less than $9\times\tau_3$ (where $\tau_3$ is a threshold for a 3×3 patch). Equivalently, $P_n$ is similar to $P_m$ if the average absolute distance is less than $\tau_3$. Similarly, for a 5×5 patch, $P_n$ is similar to $P_m$ if the average absolute difference is less than $\tau_5$ (where $\tau_5$ is a threshold for a 5×5 patch).

In many image processing applications there is a need for measuring local image similarity. These applications include but are not limited to image restoration, classification, segmentation, and detection. Two restoration problems are addressed: demosaicking and denoising as a means of describing our invention; other applications are certainly possible. In demosaicking and denoising, similar pixels in the neighborhood of the pixel under consideration are used to estimate the missing or the degraded pixel value. The resulting image quality is a direct function of the degree of structural similarity of the pixels in the similar-pixel set to the pixel or image region under consideration. An appropriately chosen set of similar pixels results in an image that has significantly better appearance with little or no artifacts.

Depending on image conditions such as brightness, illuminant, aperture, focus, exposure, and camera gain, a different patch size may be necessary to measure similar local geometry. If the degradations are small, a smaller patch size may be used. However, if the image is highly degraded, as obtained in low light conditions via a consumer cell phone camera, a small patch size does not yield satisfactory results. For these situations, a bigger patch size may be required. The size of the patch (1×1, 3×3) 5×5, and others) depends on the degradation level, computational resources, and application. The challenge is to ensure seamless transition between various patch sizes while maintaining similar performance. In addition, the method should be fast and accurate.

The challenges are met by the method and system described herein for estimating local image similarity based on the $L_1$ distance measure. An adaptive method that automatically estimates the threshold at any degradation level for similarity measures of arbitrary size based on $L_1$ distances is presented. A smaller patch size when image degradations are small and progressively transition to bigger patch sizes as image degradations become larger are employed. This is done while maintaining similar performance by keeping a constant similarity rate while moving back and forth between patch sizes. To this end, a new relationship is derived between similarity measures of various patch sizes based on the $L_1$ distance. For a patch size of 1×1 the $L_1$ distance has a relatively unknown distribution referred to as the folded normal distribution (also known as a half-normal distribution), as described by Leone et al. in their article, "The folded-normal distribution", Technometrics, 3(4), Nov. 1961, pp. 543-550, while for bigger patch sizes (3×3, and up), the $L_1$ distance has a normal distribution. Using the characteristics of these two distributions, a relationship between $L_1$ similarity measures for arbitrary patch sizes is derived. Via this relationship, a seamless transition back and forth for various patch sizes is achieved while maintaining similar performance.

When trying to estimate or restore a degraded pixel in an image, a region around the pixel is utilized. Similar pixels in the region are used to determine an estimate for the missing or degraded pixel. Using pixels that are not similar would introduce unwanted artifacts such zipper effect, false colors and edges, and a smoothed appearance; which would degrade the image. Measures available for determining similar pixels (e.g. Euclidean ($L_2$), Mahalanobis, fractional, and others) are computationally expensive. Second, there is no clear mechanism for automatically determining thresholds for various patch sizes. Sum of Absolute Differences (SAD), also known as the $L_1$ distance, is used for determining distances for similar pixels or regions.

If image degradations are small a 1×1 patch size may work well. In this case, similarity is estimated by determining an absolute difference and then comparing the absolute difference with a threshold. If the absolute difference is below the threshold, then the pixels are similar, and if the absolute difference is equal to or above the threshold, the pixels are not similar. Then, the similar pixels are able to be used to find an estimate of the missing or degraded pixel.

If image imperfections are larger, pixels are degraded significantly including the neighboring pixels around the pixel under question. Here a 1×1 patch does not work very well. Instead a bigger patch size is needed to effectively compare local geometry. In this situation, instead of comparing individual pixels, a patch of pixels (e.g. 3×3 patch) is compared. To perform patch to patch comparisons, the SAD is used. This is more robust for comparing structural similarity in the presence of severe degradations in the image. After the SAD is obtained, it is compared with a threshold to determine if the patches are sufficiently similar. If the SAD is below the threshold, then the pixels are similar, and if the SAD is equal to or above the threshold, the pixels are not similar. Depending on the patch size, there are able to be different thresholds. Again, the similar pixels are able to be used to find an estimate of the missing or degraded pixel.

As described above, when image degradation is low, any patch size would work well. However, due to the higher complexity of bigger patches, a smaller patch size is favored. For higher degradations, bigger patch sizes provide a better comparison and thus better image quality. To ensure the image looks similar when switching between patch sizes, thresholds are set properly. Specifically, it is desired that the image appearance remain similar when adaptively switching between patch sizes. In some embodiments, that means, the number of similar pixels should be the same for arbitrary patch sizes. A way of ensuring that the number of pixels is the same is by determining a relationship between thresholds of various patch sizes.

Considering the signal model to be locally constant, pixels in the similar pixel set should have the same mean $\mu$ but different noise levels derived from a probability distribution with standard deviation $\sigma$. The threshold value controls the degree of similarity and as pointed earlier depends on degradation level at the pixel in question and the similarity measure. The degradations can be blur introduced by camera optics, color cast due to illuminant, exposure compensation for high dynamic range images, noise from the signal and circuitry, gain applied to compensate for low light, and artifacts introduced in the camera pipeline, and other degradations. Generally, the noise is regarded to be normally distributed with a non-linear signal dependent variance computed via noise model. Noise variance is not constant for every pixel; it depends on the signal value, so every pixel is able to have a different noise level.

Assuming similar pixels X, Y to be random variables from a normal distribution with mean ($\mu$) and standard deviation $\sigma$: X, Y ~ N ($\mu$, $\sigma$). The threshold for a 1×1 patch is based on random variable Z = |X - Y|. The threshold for bigger patches (3×3 and up) is based on random variable Q = mean ($Z_i$); where i=I, ... $\omega$ and $\omega$ is the number of pixels in the patch. To understand the relationship between threshold for 1×1 patch size and threshold for bigger patch,sizes, the distributions of Z and Q are analyzed.

Distribution for Z

The difference X-Y has a normal distribution:

$$X - Y \sim \mathbf{N}\left(0, \sqrt{2}\sigma\right)$$

Z = |X-Y| has a folded normal distribution $N_f$ with mean:

$$\mu_z = \frac{2}{\sqrt{\pi}}\sigma = 1.1284\sigma$$

Since $E\{z^2\} = 2\sigma^2$; $\sigma_z^2 = E\{z^2\} - \mu_z^2 = 2\sigma^2(1-2/\pi)$, thus:

$$\sigma_z = \sqrt{2\left(1 - \frac{2}{\pi}\right)}\sigma = 0.8525\sigma$$

Therefore,

$$Z \sim \mathbf{N}_f \left( \frac{2}{\sqrt{\pi}}\sigma, \sqrt{2\left(1-\frac{2}{\pi}\right)}\sigma \right) = \mathbf{N}_f (1.1284\sigma, 0.8525\sigma)$$

Distribution for Q

The random variable Q is able to be written as:

$$Q = \frac{1}{\omega}\sum_{i=1}^{\omega} Z_i$$

It is reasonable to assume $Z_i$ to be independent and identically distributed ($Z_i \sim N_f(\mu_z, \sigma_z)$). The central limit theorem in statistics states that a sum of independent and identically distributed random variables ($Z_1, ..., Z_\omega$) approaches a normal distribution:

$$\mathbf{N}(\omega\mu_z, \sqrt{\omega}\sigma_z)$$

Therefore, Q is able to be considered normally distributed:

$$Q \sim \mathbf{N}\left( \mu_z, \frac{\sigma_z}{\sqrt{\omega}} \right)$$

$$Q \sim \mathbf{N}\left( \frac{2}{\sqrt{\pi}}\sigma, \frac{\sqrt{2\left(1-\frac{2}{\pi}\right)}}{\sqrt{\omega}}\sigma \right) = \mathbf{N}\left( 1.1284\sigma, \frac{0.8525}{\sqrt{\omega}}\sigma \right)$$

A patch size of $1\times1$ has a folded-normal (also referred to as half-normal) distribution which is not symmetric. For patch sizes > $1\times1$ (3x3, and up), distances are obtained from a sum of several $1 \times 1$ distances, for example, with a $3\times3$ patch, there are nine (9) absolute differences summed up and with a $5\times5$ patch there are twenty five (25) absolute differences summed up. Based on the central limit theorem, if random variables have independent identical distributions, the distribution of the sum is Gaussian. Since distances for patch sizes greater than $1\times1$ involve summing random variables that have identical folded-normal distributions, its distribution is Gaussian. This is also able to be seen in Table 1 below. Distance for $1\times1$ patch size has a folded normal distribution which is unsymmetrical while distances for patch sizes $3\times3$ and bigger have a normal distribution which is symmetric.

Table 1. Probability distributions for various patch sizes.

| | Variable | Distribution | Comments |
|---|---|---|---|
| | X,Y | $N(\mu t, \sigma)$ | Normal, symmetric |
| | X-Y | N(0, ) | Normal, symmetric |
| Patch size 1 × 1 | Z=|X-Y| | $N_f(1.1284\sigma, 0.8525\sigma)$ | Folded normal, unsymmetrical |
| Patch size > 1 × 1 | | | Normal, symmetric |
| | $Q = \dfrac{1}{\omega}\sum_{i=1}^{\omega} Z_i$ | $N\left(1.1284\sigma, \dfrac{0.8525}{\sqrt{\omega}}\sigma\right)$ | |

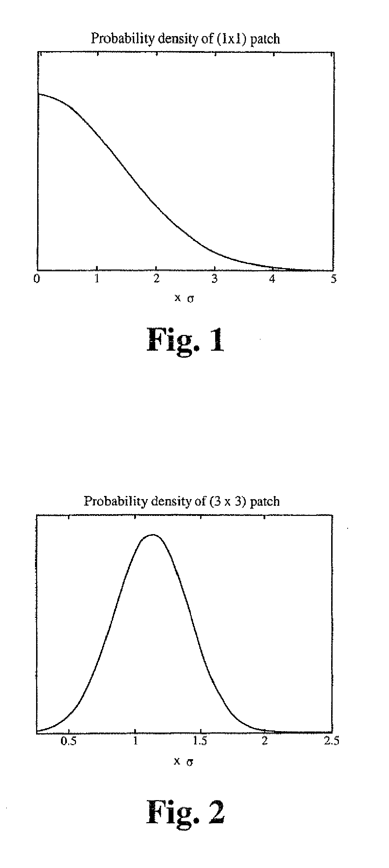

Z has a folded-normal distribution with mean $1.1284\sigma$ and standard deviation of $0.8525\sigma$. Q has a normal distribution with mean $1.1284\sigma$ and standard deviation of $0.8525\sigma/\mathrm{sqrt}(\omega)$, where $\omega$ is the number of pixels in the patch (e.g. 9 for a 3×3 patch and 25 for a 5×5 patch). Figures 1, 2, and 3 respectively illustrate graphs of probability distributions of patch sizes 1×1, 3×3, and 5×5. It is important to note that the mean and standard deviation depend on the noise level $\sigma$. An accurate estimate of the noise level is essential. The noise level depends on sensor characteristics and the point in the digital camera pipeline where the denoising method is going to be applied. Additional information is able to be found in Baqai et al., "Method of and apparatus for analyzing noise in a signal processing system," U.S. Patent Application Serial No. 2008/0240203, published on Oct. 2, 2008. When switching patch size from 1×1 to bigger, the distribution of the $L_1$ distance measure changes from folded-normal to normal. Although thresholds for various patch sizes are interrelated, their impact is different, as is able to be noticed from Figures 1, 2 and 3. Distance with patch-size 1×1 has a folded normal distribution. Bigger patch sizes result in a normal distribution with progressively decreasing standard deviations. This implies that the threshold range will become smaller as patch-size is increased. This is also shown in Table 2.

Table 2. Mean and standard deviation based on patch size.

| Patch Size | Mean (×σ) | Standard Deviation (×σ) |
|---|---|---|
| 1×1 | 1.1284 | 0.8525 |
| 3×3 | 1.1284 | 0.2842 |
| 5×5 | 1.1284 | 0.1705 |
| 7×7 | 1.1284 | 0.1218 |
| 9x9 | 1.1284 | 0.0947 |
| 11×11 | 1.1284 | 0.0775 |
| 13×13 | 1.1284 | 0.0656 |
| 15×15 | 1.1284 | 0.0568 |
| 17×17 | 1.1284 | 0.0501 |

Threshold Selection

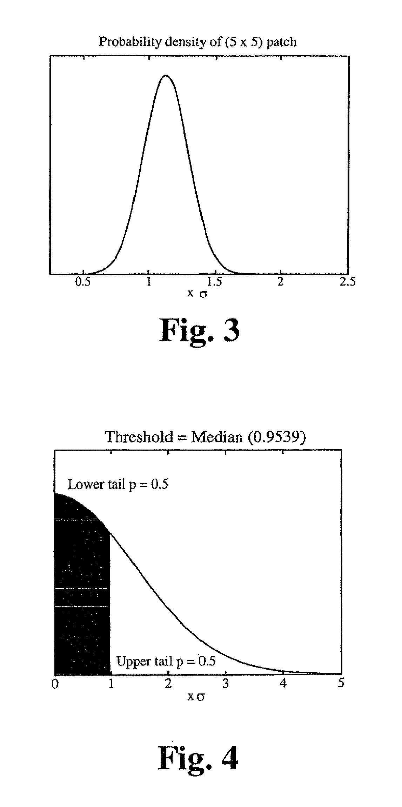

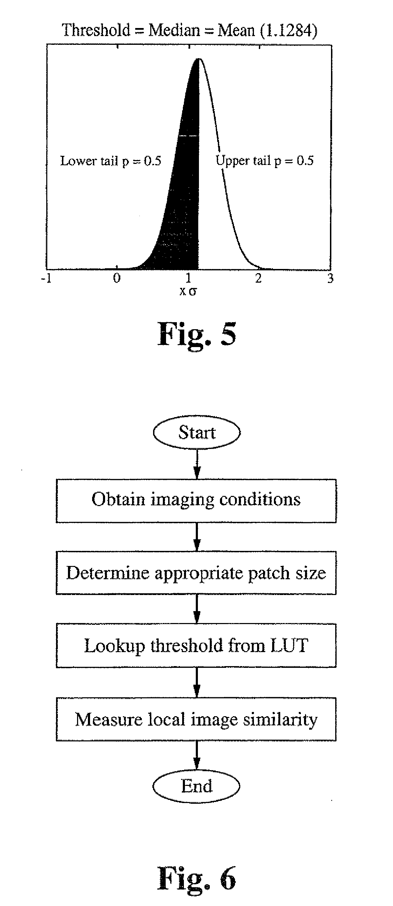

Although different patch sizes have different distributions, their means are the same and their standard deviations interrelated. Distances that are normally distributed (patch sizes > 1×1) have mean equal to the median. If the threshold is chosen to be at the mean ($1.1284\sigma$), a pixel-similarity rate of 0.5 is yielded. However, $L_1$ distance when patch size is 1×1 has a folded-normal distribution, which is (un-symmetric). Consequently, the median is not equal to the mean. To get a pixel-similarity rate of 0.5, the threshold should be at the median which is $0.9539\sigma$. Therefore, for patch size 1×1, a threshold of $0.9539\sigma$ corresponds to a threshold of $1.1284a\sigma$ for a 3x3 patch. Both cases yield a similarity rate of 0.5. In other words, to obtain the same similarity rate, threshold should be chosen such that the lower tail probability of distance measures regardless of patch size is the same. Figures 4 and 5 illustrate this point for patch sizes 1×1 and 3×3.

In the following a relationship between thresholds is derived for patch sizes > 1×1. Since the distribution of similarity measure for patch sizes > 1 × 1 (Q) is Gaussian ($Q \sim N(1.1284\sigma, 0.8525\,\sigma/\sqrt{\omega})$)), the threshold is able to be written in terms of its mean $\mu_q = 1.1284\sigma$ and the standard deviation $\sigma_q = 0.8525\sigma/\text{sqrt}(\omega)$:

$$C_i \sigma = \mu_q + \alpha \sigma_q = \left(1.1284 + \alpha \frac{0.8525}{\sqrt{\omega}}\right)\sigma .$$

Note that $\alpha = 0$ yields a pixel similarity of 0.5, $\alpha < 0$ makes similarity rate < 0.5, and a $\alpha > 0$ implies similarity rate > 0.5. Without loss of generality, a relationship between thresholds for patch sizes > 1×1 is derived, for a desired similarity rate $\geq 0.5$. In a similar manner rates < 0.5 are able to be handled. Therefore,

$$C_i = \left(1.1284 + \alpha \frac{0.8525}{\sqrt{\omega}}\right).$$

Rearranging terms $\alpha$ is able to be written as

$$\alpha = \frac{(C_i - 1.1284)\sqrt{\omega}}{0.8525} .$$

As long as $\alpha$ remains the same, a constant similarity rate irrespective of patch size will be achieved.

Therefore, with the relationship described above, switching between patch sizes is able to be implemented. For a single image, aspects of the image that are more degraded than others are dealt with a bigger patch size and less degraded aspects are handled using smaller patch sizes. Similarly, different patch sizes can be used depending on region characteristics such as smoothness, texture, and structure.

Threshold Range

95% of the area under a Gaussian distribution is within two standard deviations around the mean. This range is considered to determine the upper and lower threshold limits. The 95% region for folded-normal distribution yields a threshold range of 0.0089 to 2.772 for patch size 1×1. The threshold range for larger patch sizes (> 1×1) is $\mu_q \pm 2\mu_q$. As patch size is increased, the number of pixels in the patch $\omega$ increases, hence the standard deviation decreases (recall $\sigma_q = 0.8525\sigma/\text{sqrt}(\omega)$). Consequently the threshold range becomes narrower as is shown in Table 3.

$$Range_{patch\_size>(1\times1)} = \left(1.1284 \pm 2\frac{0.8525}{\sqrt{\omega}}\right)\sigma$$

Table 3. Threshold ranges for various patch sizes.

| Patch Size | Threshold Range |
|---|---|
| 1 | 0.0089-2.772 |
| 3 | 0.56-1.70 |
| 5 | 0.79-1.47 |
| 7 | 0.89 - 1.37 |
| 9 | 0.94 - 1.32 |
| 11 | 0.97-1.28 |

(continued)

| Patch Size | Threshold Range |
| --- | --- |
| 13 | 1.00-1.26 |
| 15 | 1.02-1.24 |
| 17 | 1.03-1.23 |

Since complexity increases with patch-size, in some embodiments, it is preferred to use the smallest patch-size that achieves the desired quality.

Figure 6 illustrates a flowchart of a method for measuring local similarity in an image. In the first step, imaging conditions such as lighting, illuminant, exposure time, aperture, scene category, and camera gain are obtained. Based on these factors, an appropriate patch size is determined. From a lookup-table (LUT) a corresponding threshold is chosen. The thresholds entries in the LUT can be based on several factors including but not limited to desired similarity rate, imaging conditions, and a seamless transition between various patch size implementations. For example, depending on the application the size of the patch is able to range anywhere from $1\times1$ to $17\times17$ or greater. The process repeats for all pixels or regions in the image. This local image similarity measure can be used for applications including but not limited to restoration, classification, segmentation, and detection.

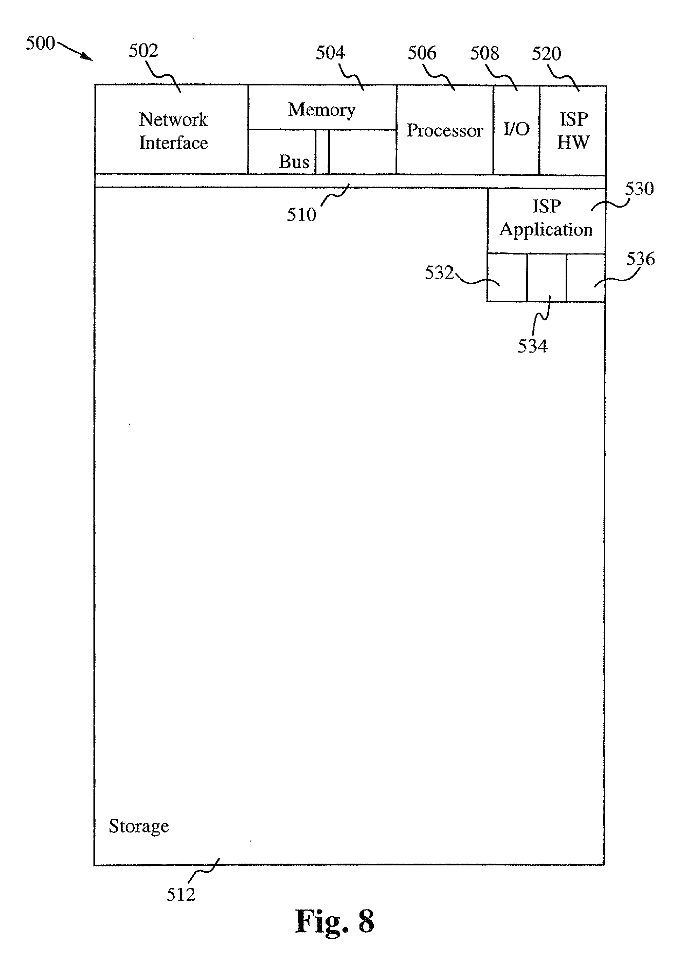

Figure 8 illustrates a block diagram of an exemplary computing device 500 configured to implement the local similarity estimation method. The computing device 500 is able to be used to acquire, store, compute, communicate and/or display information such as images and videos. For example, a computing device 500 has an image stored within, and then based on image conditions the method is able to identify local similarity within the image for various applications in a more efficient manner and with better quality than previous methods. In general, a hardware structure suitable for implementing the computing device 500 includes a network interface 502, a memory 504, a processor 506, I/O device (s) 508, a bus 510 and a storage device 512. The choice of processor is not critical as long as a suitable processor with sufficient speed is chosen. The memory 504 is able to be any conventional computer memory known in the art. The storage device 512 is able to include a hard drive, CDROM, CDRW, DVD, DVDRW, flash memory card or any other storage device. The computing device 500 is able to include one or more network interfaces 502. An example of a network interface includes a network card connected to an Ethernet or other type of LAN. The I/O device(s) 508 are able to include one or more of the following: keyboard, mouse, monitor, display, printer, modem, touchscreen, button interface and other devices. Local similarity application(s) 530 used to perform similarity measurement is likely to be stored in the storage device 512 and memory 504 and processed as applications are typically processed. More or less components shown in Figure 5 are able to be included in the computing device 500. In some embodiments, similarity measurement hardware 520 is included. Although the computing device 500 in Figure 5 includes applications 530 and hardware 520 for similarity measurement, the method is able to be implemented on a computing device in hardware, firmware, software or any combination thereof.

At each pixel or image region it is important to find an estimate of degradations that degrade the image. These include blur introduced by camera optics, color cast due to illuminant, exposure compensation for high dynamic range images, noise from the signal and circuitry, gain applied to compensate for low light, and artifacts introduced in the camera pipeline by operations such as demosaicking. In some embodiments, these informations are stored in a lookup table.

In some embodiments, the local similarity estimation application(s) 530 include several applications and/or modules. In some embodiments, the local similarity estimation application(s) 530 include a module 532 configured for estimating similarity via a $1\times1$ patch, a module 534 configured for similarity measurement by using bigger patch sizes ($>1\times1$) and a switching module 536 configured for switching between patch sizes.

Examples of suitable computing devices include a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®, a video player, a DVD writer/player, a television, a home entertainment system or any other suitable computing device.

To utilize the method of and system for measuring local image similarity, an image is acquired. Depending on the broad application being performed on the image, similar regions or pixels are identified at the appropriate time according to that application's scheme. For example, in a restoration scheme, the local similarity measurement method identifies similar regions to remove degradations, thus improving the image quality. In some embodiments, the restoration occurs automatically on a system, and in some embodiments a user is able to initiate the restoration by selecting an input such as pushing a button, touching a screen or any other input mechanism.

In operation, the method of and system for estimating local image similarity based on the $L_1$ distance measure determines the degree of degradations in the image. In some embodiments, the degradations are determined pixel by pixel and in other embodiments, larger portions of the image are used to determine degradations. The distance measure patch size depends on the application. In some embodiments, a constant similarity rate is maintained by appropriately choosing thresholds for different patch size implementations.

Although image processing has been the main focus of the description, the method and system described herein is able to be applied to other types of processing such as speech or video processing.

The method and system described herein is able to be applied to computer vision, machine learning, and image restoration applications such as super-resolution, in-painting, texture synthesis, segmentation, and object/scene/texture categorization, and other implementations.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present invention has been described in terms of specific embodiments incorporating details to facilitate the understanding of principle of construction and operation of the invention. Such reference herein to specific embodiments and details thereof is not intended to limit the scope of the claims appended hereto. It will be readily apparent to one skilled in the art that other various modifications may be made in the embodiment chosen for illustration without departing from the scope of the invention as defined by the claims.

Various respective aspects and features of the invention are defined in the appended claims. Combinations of features from the dependent claims may be combined with features of the independent claims as appropriate and not merely as explicitly set out in the claims.

Further particular and preferred aspects and exemplary implementations of the invention are set out in the following independent and dependent clauses. Features of the dependent clauses may be combined with those of the independent clauses and independent claims as appropriate and in combinations other than those explicitly recited.

1. A system implemented on a device for measuring local similarity in an image comprising:

   a. a first module configured for utilizing a 1×1 patch size;
   b. a second module operatively coupled to this module configured for utilizing larger patch sizes; and
   c. a switching module operatively coupled to the first module and the second module, the switching module configured for switching between the first module and the second module to measure local similarity of various patch sizes.

2. The system of clause 1 wherein the switching includes maintaining a same similarity rate irrespective of patch size.

3. The system of clause 1 wherein the switching is automatic.

4. The system of clause 1 wherein the larger patch sizes are selected from the group consisting of a 3x3, 5×5, 7×7, 9×9, 11×11, 13×13, 15×15 and 17×17 patch.

5. The system of clause 1 wherein the device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®, a video player, a DVD writer/player, a television and a home entertainment system.

**Claims**

1. A method implemented on a device measuring local similarity in an image comprising:

   a. obtaining imaging conditions;
   b. determining an appropriate patch size;
   c. choosing a threshold; and
   d. measuring local image similarity.

2. The method of claim 1 wherein the imaging conditions are selected from the group consisting of lighting, illumination, exposure time, aperture, scene category and camera gain.

3. The method of claim 1 wherein the appropriate patch size is determined based on the imaging conditions.

**4.** The method of claim 1 wherein the threshold is from a set of thresholds stored in a lookup table.

**5.** The method of claim 1 wherein choosing the threshold is based on a least one of desired similarity rate, imaging conditions, seamlessness of transition between patch size implementations.

**6.** The method of claim 1 further comprising adaptively switching between patch sizes.

**7.** The method of claim 6 wherein the switching is automatic.

**8.** The method of claim 1 wherein the patch size is selected from the group consisting of a 1×1, 3×3, 5×5, 7×7, 9×9, 11×11, 13×13, 15×15 and 17×17 patch size.

**9.** The method of claim 1 wherein the device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®, a video player, a DVD writer/player, a television and a home entertainment system.

**10.** A device comprising:

a. a memory for storing an application, the application configured for determining an appropriate patch size for the application and/or imaging conditions, utilizing smaller patch sizes if image degradation is below a threshold and progressively increasing the patch size as degradation level increases; and
b. a processing component coupled to the memory, the processing component configured for processing the application.

**11.** The device of claim 10 further comprising adaptively switching the patch size.

**12.** The device of claim 11 wherein adaptively switching the patch size includes maintaining a same similarity rate irrespective of the patch size.

**13.** The device of claim 12 wherein the switching is automatic.

**14.** The device of claim 10 wherein the patch is selected from the group consisting of a 1×1, 3×3, 5×5, 7×7, 9×9, 11×11, 13×13, 15×15 and 17×17 patch.

**15.** The device of claim 10 wherein the device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®, a video player, a DVD writer/player, a television and a home entertainment system.

Probability density of (1x1) patch

x σ

# Fig. 1

Probability density of (3 x 3) patch

x σ

# Fig. 2

Probability density of (5 x 5) patch

X σ

# Fig. 3

Threshold = Median (0.9539)

Lower tail p = 0.5

Upper tail p = 0.5

X σ

# Fig. 4

Threshold = Median = Mean (1.1284)

Lower tail p = 0.5    Upper tail p = 0.5

-1    0    1    2    3

x σ

# Fig. 5

Start

Obtain imaging conditions

Determine appropriate patch size

Lookup threshold from LUT

Measure local image similarity

End

# Fig. 6

$P_n$

$P_m$

▨ Pixel under consideration $P_m$

▨ Pixel $P_n$ compared to center pixel $P_m$

# Fig. 7

| Network<br>Interface | Memory<br><br>Bus | | Processor | I/O | ISP<br>HW |
| --- | --- | --- | --- | --- | --- |

ISP
Application

Storage

**Fig. 8**

Europäisches
Patentamt

European
Patent Office

Office européen
des brevets

# EUROPEAN SEARCH REPORT

Application Number

EP 10 17 3317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/212692 A1 (NAKAMI YOSHIHIRO [JP] ET AL) 28 October 2004 (2004-10-28) | 1-11, 13-15 | INV. G06T7/00 |
| Y | * paragraph [0040] - paragraph [0068] * | 12 | |
| X | US 6 813 389 B1 (GINDELE EDWARD B [US] ET AL) 2 November 2004 (2004-11-02) | 1-11, 13-15 | |
| Y | * column 5, line 43 - column 10, line 52 * | 12 | |
| A | US 2009/161982 A1 (TICO MARIUS [FI] ET AL) 25 June 2009 (2009-06-25) * paragraph [0047] - paragraph [0064] * | 1-15 | |
| X | XIUQIN DENG ET AL: "A New Kind of Weighted Median Filtering Algorithm Used for Image Processing", INFORMATION SCIENCE AND ENGIEERING, 2008. ISISE '08. INTERNATIONAL SYMPOSIUM ON, IEEE, PISCATAWAY, NJ, USA, 20 December 2008 (2008-12-20), pages 738-743, XP031383315, ISBN: 978-1-4244-2727-4 | 10,11, 13-15 | |
| Y | * the whole document * | 12 | TECHNICAL FIELDS SEARCHED (IPC) G06T |
| Y | YIFENG WU ET AL: "A Speckle Suppression Method For Sar Images Using Maximum Homogeneous Region Filter", 19900520; 19900520 - 19900524, 20 May 1990 (1990-05-20), pages 2413-2416, XP010001775, | 12 | |
| A | * the whole document * | 1-11, 13-15 | |

-----

-/--

The present search report has been drawn up for all claims

| Place of search | Date of completion of the search | Examiner |
|---|---|---|
| Munich | 15 March 2011 | Rockinger, Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

## EUROPEAN SEARCH REPORT

Application Number

EP 10 17 3317

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | BUADES A ET AL: "A Non-Local Algorithm for Image Denoising", COMPUTER VISION AND PATTERN RECOGNITION, 2005 IEEE COMPUTER SOCIETY CONFERENCE ON, IEEE, PISCATAWAY, NJ, USA LNKD-DOI:10.1109/CVPR.2005.38, vol. 2, 20 June 2005 (2005-06-20), pages 60-65, XP010817500, ISBN: 978-0-7695-2372-9 * the whole document * ----- | 1-15 | |

TECHNICAL FIELDS SEARCHED (IPC)

The present search report has been drawn up for all claims

| Place of search | Date of completion of the search | Examiner |
|---|---|---|
| Munich | 15 March 2011 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 17 3317

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2011

| Patent document cited in search report | | Publication date | Patent family member(s) | | Publication date |
|---|---|---|---|---|---|
| US 2004212692 | A1 | 28-10-2004 | EP | 1450551 A1 | 25-08-2004 |
| | | | WO | 03036938 A1 | 01-05-2003 |
| | | | JP | 4406195 B2 | 27-01-2010 |
| | | | JP | 2003189236 A | 04-07-2003 |
| US 6813389 | B1 | 02-11-2004 | EP | 1109130 A2 | 20-06-2001 |
| | | | JP | 2001202509 A | 27-07-2001 |
| US 2009161982 | A1 | 25-06-2009 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3971065 A
- US 7489346 B
- US 20070230774 A
- US 28405508 A
- US 20080240203 A

**Non-patent literature cited in the description**

- **Greg Shakhnarovich.** *Learning Task-Specific Similarity, PhD Thesis,* 2005
- **Yoshihara et al.** A 1/1.8-inch 6.4 MPixel 60 frames/s CMOS Image Sensor With Seamless Mode Change. *IEEE J. Solid-State Circuits,* December 2006, vol. 41 (12), 2998-3006
- **A. Buades et al.** Self-similarity driven color demosaicking. *IEEE TIP,* June 2009, vol. 18 (6), 1192-1202
- **K. Hirakawa ; T. Parks.** Joint demosaicing and denoising. *IEEE TIP,* August 2006, vol. 15 (8), 2146-2157
- **C. Tomasi ; R. Manduchi.** Bilateral Filtering for Gray and Color Images. *Proc. of IEEE International Conference on Computer Vision,* 1998, 841-846
- **P. Howarth ; S. Ruger.** Fractional distance measures for content-based image retrieval. *Lecture notes in computer science,* 2005, vol. 3408, ISSN 0302-9743, 447-456
- **Leone et al.** The folded-normal distribution. *Technometrics,* November 1961, vol. 3 (4), 543-550